# EUROPÄISCHE PATENTSCHRIFT

(11) **EP 0 764 614 B1**
(45) Veröffentlichungstag und Bekanntmachung des Hinweises auf die Patenterteilung: **26.01.2000**
(21) Anmeldenummer: 96114186.8
(22) Anmeldetag: 04.09.1996
(51) Int. Cl.: C04B 7/43, F27B 7/20, F27B 7/42

(54) **Anlage und Verfahren zur Herstellung von Zementklinker**
Installation and process for manufacturing cement clinker
Installation et procédé de préparation de clinker de ciment

(30) Priorität: 22.09.1995 DE 19535312
(43) Veröffentlichungstag der Anmeldung: 26.03.1997
(73) Patentinhaber: KRUPP POLYSIUS AG, 59269 Beckum (DE)
(72) Erfinder: Brentrup, Ludger, Dr.-Ing., 59302 Oelde (DE)
(74) Vertreter: Tetzner, Michael, Dipl.-Ing.

(56) Entgegenhaltungen:
- EP-A- 0 090 144
- EP-A- 0 141 932
- EP-A- 0 582 394
- DE-A- 3 012 167
- DE-A- 3 701 964
- FR-A- 2 272 358
- FR-A- 2 610 620

## Beschreibung

Die Erfindung betrifft eine Anlage gemäß dem Oberbegriff des Anspruches 1 sowie ein Verfahren gemäß dem Gattungsbegriff des Anspruches 8 zur Herstellung von Zementklinker aus Zementrohmaterial.

In der Zementindustrie ist man generell bestrebt, die Betriebskosten durch Einsatz von Ersatzbrennstoffen zu senken. Abfallstoffe, insbesondere Altreifen, stellen dabei einen in der Öffentlichkeit und in der Zementindustrie weitgehend gängigen und akzeptierten Brennstoff dar. Die bisherige Verbrennungstechnik besteht darin, daß die Altreifen über geeignete Schurren in den Eingangsbereich des Brennofens gebracht werden, und dort verbrennen. Je nach Größe rechnet man mit Verbrennungszeiten von etwa 2 bis 3 Minuten. Aufgrund der Temperaturentwicklung im Bereich des Ofeneinlaufes und der damit verbundenen Ansatzproblematik ist man in den meisten Fällen auf einen Brennstoffanteil aus Abfallstoffen von etwa 10 % des Gesamtbrennstoffes beschränkt.

Durch die DE-A-34 11 144 ist ein Verfahren zur Entsorgung von brennbaren Abfällen bei der Herstellung von Zementklinker bekannt, bei dem der Abfall getrennt verbrannt wird und das dabei entstehende Rauchgas zur Wärmebehandlung des Zementrohmehls verwendet wird.

Aus der DE-A-33 20 670 ist ferner ein Verfahren bekannt, bei dem das Zementrohmaterial in einer dem Brennofen vorgeschalteten Vorbehandlungsstufe vorerhitzt wird, anschließend in einem Brennofen zu Zementklinker fertiggebrannt und nachfolgend in einem Kühler abgekühlt wird. Ferner ist eine mit heißen Abgasen des Brennofens beheizte Pyrolysevorrichtung vorgesehen, in der heizwerthaltige Abfallstoffe durch Pyrolyse in ein brennbares Pyrolysegas umgewandelt werden, das in der Vorbehandlungsstufe verbrannt wird.

Aus der DE-C-30 12 167 ist ferner eine Anlage gemäß dem Oberbegriff des Anspruches 1 bekannt, bei der ein Vergasungsreaktor vorgesehen ist, der mit dem Kühler über eine Tertiärluftleitung derart verbunden ist, daß wenigstens ein Teil der Abluft des Kühlers als Vergasungsmittel im Vergasungsreaktor verwendet wird.

Der Erfindung liegt nun die Aufgabe zugrunde, die Anlage gemäß dem Oberbegriff des Anspruches 1 bzw. das Verfahren gemäß dem Gattungsbegriff des Anspruches 8 hinsichtlich des Wirkungsgrades des Reaktors zu verbessern. Diese Aufgabe wird erfindungsgemäß durch die kennzeichnenden Merkmale der Ansprüche 1 und 8 gelöst, indem eine Einrichtung zur Steuerung der dem Reaktor über die Tertiärluftleitung zugeführten Tertiärluftmenge in Abhängigkeit von der Füllhöhe der Abfallstoffe und/oder der Temperatur im Reaktor vorgesehen ist. Auf diese Weise kann der Vergasungsreaktor im optimalen Betriebspunkt gefahren werden, so daß sich der Anteil der Abfallstoffe auf etwa 40 % des gesamten Brennstoffs erhöht, wodurch sich die Betriebskosten für die Herstellung des Zementklinkers deutlich reduzieren.

Die Anbindung des Vergasungsreaktors an die Abgasleitung und das Anschließen der ohnehin vorhandenen Tertiärluftleitung stellen einfache Umbaumaßnahmen dar, die bei einem Großteil der bestehenden Anlagen durchgeführt werden können. Zudem hat die Vergasung der Abfallstoffe den großen Vorteil, daß neben Kohlenmonoxid auch Kohlenwasserstoffe entstehen, die stärker NOₓ-reduzierend wirken als beispielsweise Reaktionsprodukte, die bei Verbrennung von Kohlen mit geringem Anteil an flüchtigen Bestandteilen entstehen.

Weitere Ausgestaltungen der Erfindung sind Gegenstand der Unteransprüche und werden im folgenden anhand der Beschreibung zweier Ausführungsbeispiele und der Zeichnung näher erläutert.

In der Zeichnung zeigen
- Fig.1: eine schematische Darstellung der erfindungsgemäßen Anlage gemäß einem ersten Ausführungsbeispiel und
- Fig.2: eine schematische Darstellung der erfindungsgemäßen Anlage gemäß einem zweiten Ausführungsbeispiel.

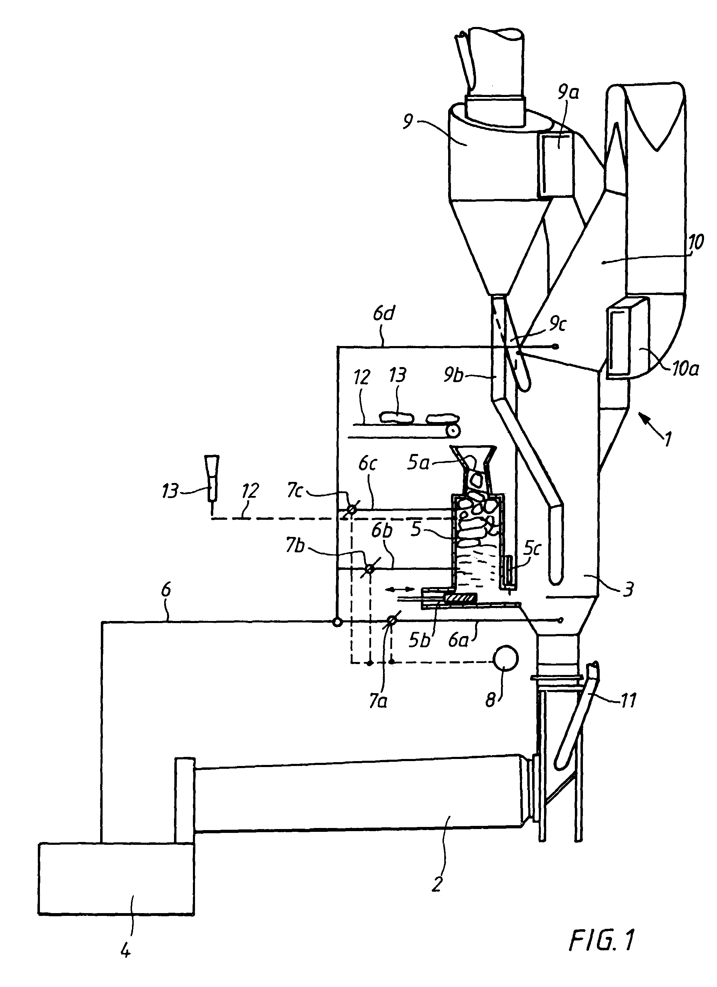

Die in Fig.1 dargestellte Anlage zur Herstellung von Zementklinker aus Zementrohmaterial besteht im wesentlichen aus einer Vorbehandlungsstufe 1 zur Wärmebehandlung des Zementrohmaterials, einem Brennofen 2 zum Fertigbrennen des Zementklinkers, einer den Brennofen 2 mit der Vorbehandlungsstufe 1 verbindenden Abgasleitung 3 sowie einem Kühler 4 zum Kühlen des gebrannten Zementklinkers. Ferner ist ein Vergasungsreaktor 5 vorgesehen, der an die Abgasleitung 3 angebunden ist. Der Vergasungsreaktor 5 ist ferner mit dem Kühler 4 über eine Tertiärluftleitung 6 derart verbunden, daß wenigstens ein Teil der Abluft des Kühlers als Vergasungsmittel im Reaktor verwendbar ist.

Die Tertiärluftleitung 6 verzweigt sich zu diesem Zweck in bis zu vier Teilluftleitungen 6a bis 6d, wobei die Teilluftleitungen 6b und 6c an zwei unterschiedlichen Stellen in den Vergasungsreaktor 5 münden. Die Teilluftleitung 6a wird unmittelbar unterhalb der Anbindungsstelle des Vergasungsreaktors 5 in die Abgasleitung 3 geleitet, während die Teilluftleitung 6d in der Vorbehandlungsstufe 1 mündet. Die Teilluftleitungen 6a, 6b, 6c weisen Regelorgane 7a, 7b und 7c auf, um die Tertiärluftmengen in den einzelnen Teilluftleitungen über eine Steuereinrichtung 8 einzustellen.

Die Vorbehandlungsstufe 1 besteht aus einem mehrstufigen Zyklonvorwärmer, von dem jedoch nur ein Zyklon 9 dargestellt ist, und einem Calcinator 10. Der Calcinator 10 schließt sich unmittelbar an die Ofenabgasleitung 3 an und mündet mit seinem in der Zeichnung dargestellten offenen Ende 10a in einen nicht näher dargestellten Abscheidezyklon. Dieser Abscheidezyklon ist über eine Gutaustragsleitung 11 mit dem Einlaufbereich des Brennofens 2 verbunden. Ferner ist eine nicht näher dargestellte Abgasleitung dieses Abscheidezyklons an das offene Ende 9a des Zyklons 9 angeschlossen. Der Zyklon 9 weist ferner 2 Gutaustragsleitungen 9b, 9c auf, die in unterschiedlicher Höhe in die Abgasleitung 3 münden.

Der Vergasungsreaktor 5 ist in diesem Ausführungsbeispiel als ausgemauerter Schacht mit quadratischem oder rechteckigem Querschnitt dargestellt. Im Rahmen der Erfindung könnte er jedoch beispielsweise auch tunnelartig ausgebildet sein. Im oberen Bereich weist der Vergasungsreaktor 5 eine beispielswiese als Pendelklappe ausgebildete Zuführeinrichtung 5a und im unteren Bereich eine Austragseinrichtung 5b auf. Die Austragseinrichtung 5b wird beispielsweise durch einen hydraulisch betätigbaren Stößel gebildet, mit dem die Abfallstoffe bzw. die teilvergasten Rückstände langsam in Richtung der Abgasleitung 3 geschoben werden. Die Austragseinrichtung könnte beispielsweise aber auch durch einen bewegbaren Vorschubrost gebildet werden.

Im Betrieb der in Fig.1 dargestellten Anlage wird das Zementrohmaterial im Bereich des obersten Zyklons der Vorbehandlungsstufe 1 aufgegeben. Es gelangt dann über die einzelnen Zyklonstufen bis in den Zyklon 9, von dem das wärmebehandelte Zementrohmaterial über die Gutaustragsleitungen 9b, 9c in die Abgasleitung 3 transportiert wird.

Das Zementrohmaterial kommt dort einerseits mit den heißen Ofengasen und andererseits mit dem in Reaktor 5 erzeugten Brennstoff in Berührung. Durch die Verbrennung dieses Brennstoffes und eines möglicherweise zusätzlich eingeführten Brennstoffes wird das Zementrohmaterial kalziniert. Der Calcinationsprozeß beginnt bereits wenige Augenblicke nach der Zuführung des Materials in die Abgasleitung 3. Dieser Bereich der Abgasleitung 3 ist somit strenggenommen dem Calcinator 10 zuzurechnen. Das fertig calcinierte und ggf. teilweise rezirkulierte Gut gelangt dann über die Gutaustragsleitung 11 in den Einlaufbereich des Brennofens 2. In diesem Brennofen 2, der üblicherweise als Drehrohrofen ausgebildet ist, wird der Zementklinker fertiggebrannt.

Die bei der anschließenden Kühlung im Kühler 4 entstehende heiße Abluft, die beispielsweise eine Temperatur von etwa 800 °C aufweist, wird einerseits über die Teilluftleitung 6a in die Abgasleitung 3 und über die Teilluftleitung 6d in den Calcinator 10 eingeführt, um dort den Calcinationsprozeß zu steuern. Eine weitere Teilmenge dieser Tertiärluft wird über die Teilluftleitungen 6b und 6c ferner dem Vergasungsreaktor 5 zugeführt, um dort als Vergasungsmittel zu wirken. Die Steuerung des Vergasungsvorganges erfolgt über die Steuereinrichtung 8, die mit den Regelorganen 7b und 7c in Verbindung steht. Auf diese Weise läßt sich die dem Vergasungsreaktor 5 zuzuführende Tertiärluftmenge regeln. Im Vergasungsreaktor 5 sind ferner wahlweise Mittel zur Bestimmung der Füllhöhe der Abfallstoffe bzw. Mittel zur Bestimmung der Temperatur im Reaktor vorgesehen. Diese Mittel sind mit der Steuereinrichtung 8 verbunden, so daß die Tertiärluftmenge derart gesteuert wird, daß der Vergasungsreaktor in einem optimalem Betriebspunkt gefahren wird. So wird beispielsweise beim Absinken der Temperatur im Reaktor mehr Tertiärluft zugegeben, wodurch der Teilverbrennungsanteil steigt und sich dabei auch die Temperatur und die Vergasungsgeschwindigkeit erhöht. Ferner kann die Füllhöhe im Reaktor durch Regulierung der Tertiärluftmenge auf einem optimalen Stand gehalten werden. Bei Absinken der Temperatur oder Ansteigen des Füllstands im Reaktor wird über die Steuereinrichtung 8 die Tertiärluftmenge erhöht bzw. beim Ansteigen der Temperatur und beim Absinken des Füllstands im Reaktor verringert.

Die Abfallstoffe, beispielsweise Altreifen 13, werden über ein Förderorgan 12 dem Vergasungsreaktor 5 zugeführt. Bei Verwendung von Altreifen als Abfallstoffe können diese ohne vorherige Zerkleinerung unmittelbar aufgegeben werden. Die Steuerung der Zufuhr der Abfallstoffe erfolgt beispielsweise über eine Wägung der Abfallstoffe und eine zeittaktgesteuerte Zugabe entsprechend einem vorgewählten Sollwert.

Die mit ca. 800 °C in den Vergasungsreaktor eintretende Tertiärluft streicht an dem Brennstoff vorbei, bzw. durchstreift das sich im Reaktor bildende Haufwerk. Die dabei ausgelöste Vergasung bildet ein stark vorgeheiztes Schwachgas, welches im Calcinator unter weiterer Zugabe von Tertiärluft als Brenngas verbrannt wird. Die nicht vergasten Reste wie inerte oder auch noch nicht vollständig vergaste organische Bestandteile fallen am Ende des Vergasungsreaktors in die Abgasleitung 3 und von dort in den Brennofen 2. Es besteht jedoch auch die Möglichkeit, die nicht vollständig vergasten Reste zunächst dem Prozeß zu entziehen und erst im Anschluß an eine Aufbereitung ganz oder teilweise in diesen zurückzuführen.

Aufgrund der hohen Gasgeschwindigkeiten im Bereich der Abgasleitung dürften noch an den inerten Bestandteilen haftende und nur partiell umgesetzte Rückstände weitgehend mit dem Gasstrom in den Calcinator gerissen werden und dort verbrennen. Die über die Teilluftleitungen 6a, 6b und 6c zugeführten Tertiärluftmengen werden über die Regelorgane 7a, 7b, 7c und die Steuereinrichtung 8 entsprechend der Anteile an Abfallstoffen und konventionellem Brennstoff derart aufgeteilt, daß auch im Calcinator bis zum Eintritt der Oberluft über die Teilluftleitung 6d eine reduzierende Atmosphäre herrscht.

Die bei der Vergasung neben Kohlenmonoxid entstehenden Kohlenwasserstoffe wirken stärker NOₓ-reduzierend als beispielsweise Reaktionsprodukte, die bei der Verbrennung von Kohlen mit geringem Anteil an flüchtigen Bestandteilen entstehen.

Besonders vorteilhaft wird das erfindungsgemäße Verfahren, wenn als Abfallstoffe Altreifen verwendet werden, wobei auch andere Sekundärbrennstoffe eingesetzt werden können.

Die einfache Ausgestaltung des Vergasungsreaktors 5 als ausgemauerter Tunnel- oder Schachtreaktor mit quadratischem oder rechteckigem Querschnitt stellt zudem einen sehr einfachen und robusten Vergasungsreaktor dar. Der bei der Vergasung freiwerdende Kohlenstoff (Ruß) verringert die Reibung zwischen den Altreifen und den Wänden des Vergasungsreaktors, so daß Verstopfungen insbesondere im Bereich der Austragseinrichtung 5b weitgehend vermieden werden können.

Um den Vergasungsreaktor 5 bei einem möglichen Ofenstop von der restlichen Anlage, und insbesondere vom Calcinator 10 trennen zu können, ist im Bereich der Austragseinrichtung 5b eine beispielsweise als Fallschott ausgebildete Absperreinrichtung 5c vorgesehen. Die Abfallstoffe, die sich beim Absperren des Reaktors noch in diesem befinden, erzeugen jedoch weiterhin Brenngas. Um einen Überdruck und eine eventuelle Explosion zu vermeiden, ist es daher erforderlich, das noch entstehenden Brenngas abzuleiten. Erfindungsgemäß wird beim Absperren des Reaktors eine gestrichelt dargestellte Leitung 12 geöffnet, über die das Brenngas zu einer Einrichtung 13 abgeleitet werden kann, in der das Brenngas abgefackelt wird.

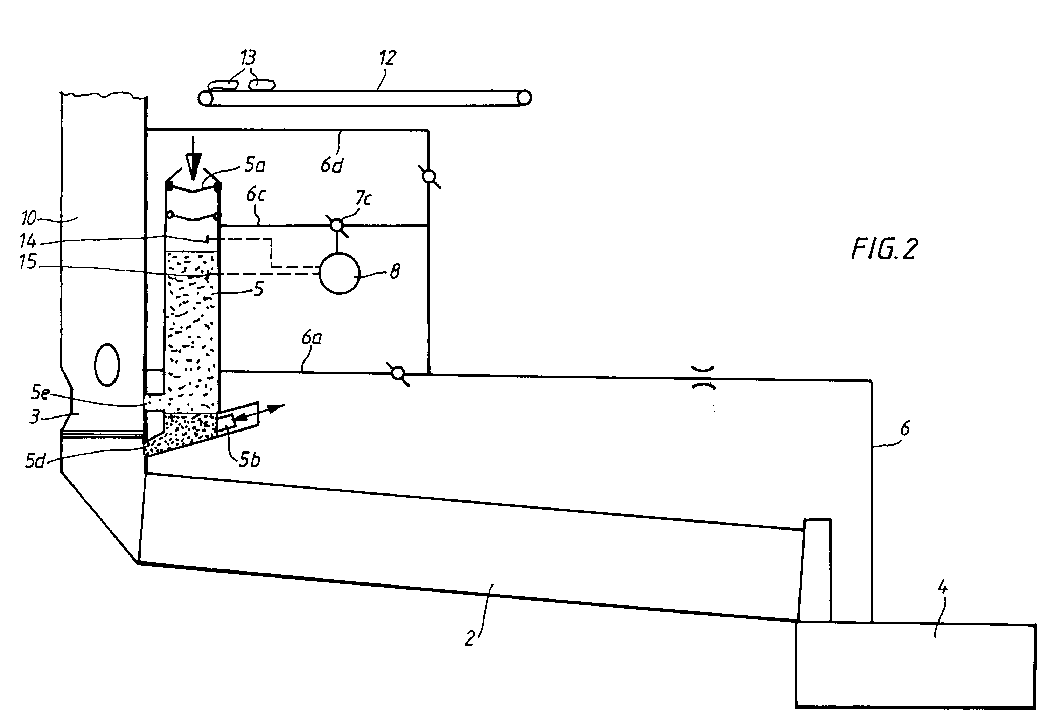

Fig.2 zeigt eine Anlage zur Herstellung von Zementklinker gemäß einem zweiten Ausführungsbeispiel, bei dem für gleiche Anlagenteile dieselben Bezugszeichen verwendet worden sind. Der Unterschied zum ersten Ausführungsbeispiel besteht hier im wesentlichen nur darin, daß der Vergasungsreaktor 5 eine weitere Austragsöffnung 5e aufweist, durch die das Brenngas getrennt von etwaigen noch unvergasten Rückständen in die Abgasleitung 3 gegeben werden kann.

In diesem Zusammenhang wäre es auch denkbar, daß eine Teilmenge des im Vergasungsreaktor 5 erzeugten Brenngases zum Hauptbrenner des Brennofens 2 geführt wird.

In Fig.2 sind auch die Mittel 14 zur Bestimmung der Füllhöhe der Abfallstoffe im Reaktor sowie die Mittel 15 zur Bestimmung der Temperatur im Reaktor schematisch dargestellt, die jeweils mit der Steuereinrichtung 8 verbunden sind. In dem in Fig.2 dargestellten Ausführungsbeispiel wird die Tertiärluft lediglich an einer Stelle über die Leitung 6c dem Reaktor zugeführt. Die Steuerung der Tertiärluftmenge erfolgt über die Steuereinrichtung 8 und das Regelorgan 7c.

Die erfindungsgemäße Anlage gemäß den beiden dargestellten Ausführungsbeispielen läßt sich durch einen vergleichsweise einfachen Umbau bestehender Anlagen erreichen, indem lediglich der Vergasungsreaktor 5 an die Abgasleitung 3 angebunden wird und die in vielen Fällen bereits vorhandene Tertiärluftleitung zusätzlich verzweigt und an den Vergasungsreaktor 5 angeschlossen wird.

## Patentansprüche

1. Anlage zur Herstellung von Zementklinker aus Zementrohmaterial mit
a) einer Vorbehandlungsstufe (1) für das Zementrohmaterial,
b) einem Brennofen (2) zum Fertigbrennen des Zementklinkers,
c) einer den Brennofen (2) mit der Vorbehandlungsstufe (1) verbindenden Abgasleitung (3),
d) einem Kühler (4) zum Kühlen des gebrannten Zementklinkers
e) sowie einem an die Abgasleitung (3) angeschlossenen Reaktor zur Erzeugung eines Brenngases aus Abfallstoffen, insbesondere aus Altreifen, wobei der Reaktor als Vergasungsreaktor (5) ausgebildet und mit dem Kühler über eine Tertiärluftleitung (6) derart verbunden ist, daß wenigstens ein Teil der Abluft des Kühlers (4) als Vergasungsmittel im Vergasungsreaktor verwendbar ist,
gekennzeichnet durch
eine Einrichtung (8) zur Steuerung der dem Reaktor (5) über die Tertiärluftleitung zugeführten Tertiärluftmenge in Abhängigkeit von der Füllhöhe der Abfallstoffe und/oder der Temperatur im Reaktor.

2. Anlage nach Anspruch 1, dadurch gekennzeichnet, daß im Reaktor (5) Mittel (14) zur Bestimmung der Füllhöhe der Abfallstoffe vorgesehen sind, die mit der Einrichtung (8) zur Steuerung der Tertiärluftmenge in Verbindung stehen.

3. Anlage nach Anspruch 1, dadurch gekennzeichnet, daß im Reaktor (5) Mittel (15) zur Bestimmung der Temperatur im Reaktor vorgesehen sind, die mit der Einrichtung (8) zur Steuerung der Tertiärluftmenge in Verbindung stehen.

4. Anlage nach Anspruch 1, dadurch gekennzeichnet, daß die Tertiärluftleitung (6) an mindestens einer, vorzugsweise an zwei Stellen des Vergasungsreaktors (5) angeschlossen ist.

5. Anlagen nach Anspruch 1, dadurch gekennzeichnet, daß der Vergasungsreaktor (5) eine durch einen betätigbaren Stößel gebildete Austragseinrichtung (5b) zum Austragen nicht vollständig vergaster Reste der Abfallstoffe in die Abgasleitung (3) aufweist.

6. Anlage nach Anspruch 1, dadurch gekennzeichnet, daß die Vorbehandlungsstufe 1 einen Calcinator (10) zum Calcinieren des Zementrohmaterials aufweist.

7. Anlage nach Anspruch 1, dadurch gekennzeichnet, daß der Reaktor eine Absperreinrichtung (5c) aufweist, um ein Überströmen des im Reaktor erzeugten Brenngases in die übrige Anlage unter bestimmten Umständen zu verhindern, und ferner eine Einrichtung (13) zur Abfackelung des Brenngases vorgesehen ist, das bei abgesperrten Reaktor noch erzeugt wird.

8. Verfahren zur Herstellung von Zementklinker aus Zementrohmaterial, wobei das Zementrohmaterial zunächst vorbehandelt, dann gebrannt und schließlich mit Luft abgekühlt wird, wobei ferner Abfallstoffe, insbesondere Altreifen, in einem Reaktor mit der bei der Kühlung des Zementklinkers entstehenden Tertiärluft vergast werden, wobei ein Brenngas erzeugt wird, das zumindest teilweise zur Vorbehandlung des Zementrohmaterials verwendet wird,
dadurch gekennzeichnet, daß
die dem Reaktor zugeführte Tertiärluftmenge in Abhängigkeit der Füllhöhe der Abfallstoffe und/oder der Temperatur im Reaktor geregelt wird.

9. Verfahren nach Anspruch 8, dadurch gekennzeichnet, daß das erzeugte Brenngas zumindest teilweise getrennt von etwaigen nicht vollständig vergasten Resten der Abfallstoffe aus dem Reaktor abgeführt wird.

10. Verfahren nach Anspruch 8, dadurch gekennzeichnet, daß das erzeugte Brenngas beim Calcinieren des Zementrohmaterials verwendet wird.

## Claims

1. Installation for the production of cement clinker from cement raw material, having
a) a pretreatment stage (1) for the cement raw material,
b) a furnace (2) for finish-burning of the cement clinker,
c) a waste gas pipe (3) connecting the furnace (2) to the pretreatment stage (1),
d) a cooler (4) for cooling the burnt cement clinker,
e) and a reactor, connected to the waste gas pipe (3), for producing a fuel gas from waste materials, especially from used tyres, the reactor being in the form of a gasification reactor (5) and being connected to the cooler by way of a tertiary air pipe (6) in such a manner that at least a portion of the waste air from the cooler (4) can be used as the gasifying agent in the gasification reactor,
characterised by
a device (8) for controlling the amount of tertiary air supplied to the reactor (5) by way of the tertiary air line in dependence on the filling height of the waste materials and/or the temperature in the reactor.

2. Installation according to claim 1, characterised in that means (14) for determining the filling height of the waste materials are provided in the reactor (5), which means (14) communicate with the device (8) for controlling the amount of tertiary air.

3. Installation according to claim 1, characterised in that means (15) for determining the temperature in the reactor are provided in the reactor (5), which means (15) communicate with the device (8) for controlling the amount of tertiary air.

4. Installation according to claim 1, characterised in that the tertiary air pipe (6) is connected to the gasification reactor (5) in at least one place, preferably in two places.

5. Installation according to claim 1, characterised in that the gasification reactor (5) has a discharge device (5b), formed by an actuatable ram, for discharging incompletely gasified residues of the waste materials into the waste gas pipe (3).

6. Installation according to claim 1, characterised in that the pretreatment stage 1 has a calcinator (10) for calcining the cement raw material.

7. Installation according to claim 1, characterised in that the reactor has a shut-off device (5c) for preventing the fuel gas produced in the reactor from overflowing into the remainder of the installation under certain circumstances, and there is further provided a device (13) for burning off the fuel gas that is still produced when the reactor is shut off.

8. Process for the production of cement clinker from cement raw material, wherein the cement raw material is first pretreated, then burnt and finally cooled with air, and wherein, further, waste materials, especially used tyres, are gasified in a reactor with the tertiary air produced on cooling of the cement clinker, there being produced a fuel gas of which at least a portion is used for the pretreatment of the cement raw material,
characterised in that
the amount of tertiary air supplied to the reactor is controlled in dependence on the filling height of the waste materials and/or the temperature in the reactor.

9. Process according to claim 8, characterised in that at least a portion of the fuel gas that is produced is separated from any incompletely gasified residues of the waste materials and discharged from the reactor.

10. Process according to claim 8, characterised in that the fuel gas that is produced is used in the calcination of the cement raw material.

## Revendications

1. Installation pour la production de clinker de ciment à partir de matières premières de ciment, comprenant :
a) un étage de traitement préliminaire (1) pour les matières premières de ciment,
b) un four à combustion (2) pour la cuisson finale du clinker de ciment,
c) une conduite de gaz d'échappement (3) qui relie le four de combustion (2) à l'étage de traitement préliminaire (1),
d) un refroidisseur (4) pour refroidir le clinker de ciment après cuisson, et
e) un réacteur raccordé à la conduite de gaz d'échappement (3) afin de produire un gaz combustible à partir de déchets, en particulier de vieux pneumatiques, ledit réacteur étant réalisé sous forme de réacteur de gazéification (5), et relié au refroidisseur via une conduite d'air tertiaire (46) de telle façon qu'une partie au moins de l'air sortant du refroidisseur (4) est utilisable à titre d'agent de gazéification dans le réacteur de gazéification,
caractérisée par
des moyens (8) pour commander la quantité d'air tertiaire admise via la conduite d'air tertiaire dans le réacteur (5) en fonction de la hauteur de remplissage des déchets et/ou de la température dans le réacteur.

2. Installation selon la revendication 1, caractérisée en ce que l'on prévoit dans le réacteur (5) des moyens (14) pour déterminer la hauteur de remplissage des déchets, qui sont reliés aux moyens (8) pour la commande de la quantité d'air tertiaire.

3. Installation selon la revendication 1, caractérisée en ce que l'on prévoit dans le réacteur (5) des moyens (15) pour déterminer la température dans le réacteur, qui sont reliés aux moyens (8) pour la commande de la quantité d'air tertiaire.

4. Installation selon la revendication 1, caractérisée en ce que la conduite d'air tertiaire (6) est raccordée à au moins un emplacement, et de préférence à deux emplacements, du réacteur de gazéification (5).

5. Installation selon la revendication 1, caractérisée en ce que le réacteur de gazéification (5) comporte un dispositif d'expulsion (5b), formé par un poussoir susceptible d'être actionné, pour expulser les restes de déchets qui n'ont pas été complètement gazéifiés dans la conduite de gaz d'échappement (3).

6. Installation selon la revendication 1, caractérisée en ce que l'étage de traitement préliminaire (1) comprend un four de calcination (10) afin de calciner les matières premières de ciment.

7. Installation selon la revendication 1, caractérisée en ce que le réacteur comprend un dispositif obturateur (5c) afin d'empêcher dans certaines circonstances un épanchement des gaz combustibles produits dans le réacteur vers le reste de l'installation, et en outre des moyens pour brûler les gaz combustibles qui sont encore produits lorsque le réacteur est obturé.

8. Procédé pour produire du clinker de ciment à partir de matières premières de ciment, dans lequel les matières premières de ciment sont d'abord soumises à un traitement préliminaire, puis à une cuisson, et sont enfin refroidies avec de l'air, et dans lequel des déchets, en particulier des vieux pneumatiques, sont gazéifiés dans un réacteur avec l'air tertiaire qui résulte du refroidissement du clinker de ciment, et l'on produit un gaz combustible que l'on utilise au moins partiellement pour le traitement préliminaire des matières premières de ciment,
caractérisé en ce que
la quantité d'air tertiaire admise dans le réacteur est régulée en fonction de la hauteur de remplissage des déchets et/de la température dans le réacteur.

9. Procédé selon la revendication 8, caractérisé en ce que le gaz combustible produit est évacué hors du réacteur au moins partiellement séparément d'éventuels restes de déchets qui ne sont pas complètement gazéifiés.

10. Procédé selon la revendication 8, caractérisé en ce que le gaz combustible produit est utilisé pour la calcination des matières premières de ciment.
